# EUROPEAN PATENT APPLICATION

(11) **EP 3 238 530 A2**
(43) Date of publication of application: **01.11.2017**
(21) Application number: 17164296.0
(22) Date of filing: 31.03.2017
(51) Int. Cl.: A01G 27/00, B05B 1/26

(54) **AN IRRIGATION DEVICE**

(30) Priority: 27.04.2016 NZ 71944316; 02.07.2016 AU 2016204601; 20.03.2017 SG 10201702222T; 25.01.2017 US 201715415824; 25.01.2017 CA 2956044
(71) Applicant: Kendall, John William, Westbank, British Columbia V4T 1L3 (CA)
(72) Inventor: Kendall, John William, Westbank, British Columbia V4T 1L3 (CA)
(74) Representative: Hocking, Adrian Niall

(57) **Abstract**

An irrigation device, comprising: a base portion (1) and a liquid dispersal portion (19), the base portion (1) any geometric shape but preferably is a truncated hollow cone with a flat top (2), the flat top (2) planar with an aperture (3) any shape or size at the centre, the aperture (3) for the insertion of an irrigation pipe or hose (53), the aperture (3) configured for the attachment of the liquid dispersal portion (19), the aperture (3) comprising three or more sidewalls (4), a bottom edge (5) configured at the lower perimeter of the base portion (1), a top edge (6) configured at the flat top (2) perimeter, a sloped or curved surface (7) between the bottom edge (5) and the top edge (6), the base portion (1) wider at the bottom than the top to provide stability in use, a plurality of channels (8) configured anywhere on the base portion (1) slope (7), the channels (8) arch shaped (10) but can be any shape or profile, the channels (8) closed at the top and open at the bottom with a cover wall (12) configured at each end, one channel (8) configured without the cover wall (12) so a hose (53) and/or pipe may be inserted into the interior of the base portion (1), the hose (53) and/or pipe having two ends, one end of the hose (53) and/or pipe configured with a receptacle, the receptacle disposed to attach to the liquid dispersal portion (19), the other end configured with a receptacle disposed to connect to an external water supply, a spillway (9) between each channel (8), a flange (15) configured about the perimeter of the base portion (1) bottom edge (5), the flange (15) substantially planar, one or more openings (16) spaced about the flange (15), the openings (16) through the flange (15), a nail or spike inserts through any flange (15) opening (16) to secure the base portion (1) to earth and/or soil at ground level, the liquid dispersal portion (19) attached to the base portion (1) at the top centre to water plants (54) growing about the periphery of the irrigation device in plant growth zones (18) within a plant growth area (61), the plant growth area (61) any geometric shape but preferably a circle shape, a plant support (55) disposed to join with the base portion (1) to support plants (54).

## Description

### Field of the Invention.

This application claims the benefit of priority from New Zealand Utility Patent Application No. 719443 titled "An Irrigation Device" in New Zealand, 27 April 2016 and Australian Utility Patent Application No. 2016204601 titled "An Irrigation Device" filed in Australia, 02 July 2016 and Australian Utility Patent Application No. 2016256677 titled "An Irrigation Device" filed in Australia, 08 November 2016 and United States Utility Patent Application No. No. 15415824 titled "An Irrigation Device" filed in the United States, 25 January 2017 and Canadian Utility Patent Application 2,956,044 titled "An Irrigation Device" filed in Canada, 25 January 2017 and Singapore Utility Patent Application 10201702222T titled "An Irrigation Device" filed in Singapore, 20 January 2017.

One or more embodiments of the invention generally relate to an irrigation device. More particularly, the invention relates to an irrigation device, comprising: a base portion and a liquid dispersal portion. The liquid dispersal portion configured at the top centre of the base portion. A nozzle portion attaches to the liquid dispersal portion, the nozzle portion configured to alter the direction of a flow of a liquid to plants growing in a plant growth area comprising plurality of plant growth zones spaced about the periphery of the base portion bottom edge. The support portion is substantially a truncated cone with an open top and bottom, the top wider than the bottom for stability in use.

### Background Art.

The following background information may present examples of specific aspects of the prior art (e.g., without limitation, approaches, facts, or common wisdom) that, while expected to be helpful to further educate the reader as to additional aspects of the prior art, is not to be construed as limiting the present invention, or any embodiments thereof, to anything stated or implied therein or inferred thereupon.

The following is an example of a specific aspect in the prior art that, while expected to be helpful to further educate the reader as to additional aspects of the prior art, is not to be construed as limiting the present invention, or any embodiments thereof, to anything stated or implied therein or inferred thereupon. By way of educational background, another aspect of the prior art generally useful to be aware of is that plants, are living multicellular organisms of the kingdom Plantae. They form a clade that includes the flowering plants, conifers and other gymnosperms, ferns, club mosses, hornworts, liverworts, and mosses. Typically, plant growth is determined by environmental factors, such as temperature, available water, available light, carbon dioxide, and nutrients in a growth medium, such as soil. Any change in the availability of these external conditions will be reflected in the plant's growth. There are biotic factors that are also capable of affecting plant growth. Plants compete with other plants for space, water, light and nutrients.

Plant growth can also be affected by liquid and nutrient dispersed above and below the plant canopy. Many plants and in particular most varieties of vegetables grow better when water and nutrient are applied at ground level rather than from above as it is with most irrigation products on the market.

Unfortunately, when plants like vegetable plants for example, are watered from above, a multitude of problems can arise for both the plant and fruit growing on the plant.

Some of these problems may include anthracnose, blossom end rot, bacteria wilt, damping off, early blight, gray mold rot, soil rot, graywall and catfacing to name a few.

In many instances, standard irrigators spray plants indiscriminately; in an undefined pattern where plants receive an unequal share of liquid and nutrient. An unequal distribution can cause uneven plant growth, where one plant may grow faster than one beside it. The faster growing plant will have a tendency to block sunlight, inhibiting the growth of the smaller plant beside it.

Overwatered plants may grow slowly and may become susceptible to disease. Under watered plants may not mature and produce fruit. As a result, only a few plants may mature properly and bare fruit with indiscriminate or unequal watering.

Some vegetables require precise amounts of liquid and nutrient at specific times. A Squash plant prefers a large amount of water periodically dispersed under the leaves of the plant plants to grow and set sizable fruit, for example.

Irrigated water spread over the top of cucumber and pumpkin leaves encourage the spread of bacterial fungus such as white spot and cucumber mildew, for example.

The uncontrolled and improperly applied irrigation methods may attract unwanted insects and keep desirable pollinating insects away.

Typical spray irrigators may spray everything but the garden on a windy day, which wastes water.

Irrigation products that are not targeted to plants waste water, requiring a more frequent watering cycle and more water use. Growing plants in rows is outdated and an inefficient use of water.

In view of the foregoing, it is clear that these traditional techniques are not perfect and leave room for more optimal approaches.

### Summary of the Invention.

The present invention is best understood by reference to the detailed figures and description set forth herein.

Embodiments of the invention are discussed below with reference to the Figures. However, those skilled in the art will readily appreciate that the detailed description given herein with respect to these figures is for explanatory purposes as the invention extends beyond these limited embodiments. For example, it should be appreciated that those skilled in the art will, in light of the teachings of the present invention, recognize a multiplicity of alternate and suitable approaches, depending upon the needs of the particular application, to implement the functionality of any given detail described herein, beyond the particular implementation choices in the following embodiments described and shown. That is, there are numerous modifications and variations of the invention that are too numerous to be listed but that all fit within the scope of the invention. Also, singular words should be read as plural and vice versa and masculine as feminine and vice versa, where appropriate, and alternative embodiments do not necessarily imply that the two are mutually exclusive.

It is to be further understood that the present invention is not limited to the particular methodology, compounds, materials, manufacturing techniques, uses, and applications, described herein, as these may vary. It is also to be understood that the terminology used herein is used for the purpose of describing particular embodiments only, and is not intended to limit the scope of the present invention. It must be noted that as used herein and in the appended claims, the singular forms "a," "an," and "the" include the plural reference unless the context clearly dictates otherwise. Thus, for example, a reference to "an element" is a reference to one or more elements and includes equivalents thereof known to those skilled in the art. Similarly, for another example, a reference to "a method", "a step" or "a means" is a reference one or more methods, steps or means and may include sub-steps and subservient means. All conjunctions used are to be understood in the most inclusive sense possible. Thus, the word "or" should be understood as having the definition of a logical "or" rather than that of a logical "exclusive or" unless the context clearly necessitates otherwise. Structures described herein are to be understood also to refer to functional equivalents of such structures. Language that may be construed to express approximation should be so understood unless the context clearly dictates otherwise.

Unless defined otherwise, all technical and scientific terms used herein have the same meanings as commonly understood by one of ordinary skill in the art to which this invention belongs. Preferred methods, techniques, devices, and materials are described, although any methods, techniques, devices, or materials similar or equivalent to those described herein may be used in the practice or testing of the present invention. Structures described herein are to be understood also to refer to functional equivalents of such structures.

The present invention will now be described in detail with reference to embodiments thereof as illustrated in the accompanying drawings.

From reading the present disclosure, other variations and modifications will be apparent to persons skilled in the art. Such variations and modifications may involve equivalent and other features which are already known in the art, and which may be used instead of or in addition to features already described herein.

Although Claims have been formulated referencing this Application to particular combinations of features, it should be understood that the scope of the disclosure of the present invention also includes any novel feature or any novel combination of features disclosed herein either explicitly or implicitly or any generalization thereof, whether or not it relates to the same invention as presently claimed in any Claim and whether or not it mitigates any or all of the same technical problems as does the present invention.

Features that are described in the context of separate embodiments may also be provided in combination in a single embodiment. Conversely, various features that are, for brevity, described in the context of a single embodiment, may also be provided separately or in any suitable subcombination. The Applicants hereby give notice that new Claims may be formulated to such features and/or combinations of such features during the prosecution of the present Application or of any further Application derived therefrom.

References to "one embodiment," " some embodiments," "another embodiment," "preferred embodiment," "an embodiment," "example embodiment," "various embodiments," etc., may indicate that the embodiment(s) of the invention so described may include a particular feature, structure, or characteristic, but not every embodiment necessarily includes the particular feature, structure, or characteristic. Further, repeated use of the phrase "in one embodiment," or "in a preferred embodiment," or " in another embodiment," do not necessarily refer to the same embodiment, although they may.

Headings provided herein are for convenience and are not to be taken as limiting the disclosure in any way.

The enumerated listing of items does not imply that any or all of the items are mutually exclusive, unless expressly specified otherwise.

The terms "a", "an" and "the" mean "one or more", unless expressly specified otherwise.

Portions, assemblies and/or components that are in at least general communication with each other need not be in continuous communication with each other, unless expressly specified otherwise. In addition, portions, assemblies and/or components that are in at least general communication with each other may communicate directly or indirectly through one or more intermediaries.

A description of an embodiment with several components in communication with each other does not imply that all such components are required. On the contrary a variety of optional components are described to illustrate the wide variety of possible embodiments of the present invention.

As is well known to those skilled in the art many careful considerations and compromises typically must be made when designing for the optimal manufacture of a commercial implementation any system, and in particular, the embodiments of the present invention. A commercial implementation in accordance with the spirit and teachings of the present invention may configured according to the needs of the particular application, whereby any aspect(s), feature(s), function(s), result(s), component(s), approach(es), method(s), or step(s) of the teachings related to any described embodiment of the present invention may be suitably omitted, included, adapted, mixed and matched, or improved and/or optimized by those skilled in the art, using their average skills and known techniques, to achieve the desired implementation that addresses the needs of the particular application.

The present invention will now be described in detail with reference to embodiments thereof as illustrated in the accompanying drawings.

In a preferred embodiment of the present invention, an irrigation device disperses liquid from an irrigation device to a plurality of plant growth zones within a plant growth area, which may be any geometric shape but is preferably circle shaped.

The irrigation device consists of a base portion and a liquid dispersal portion. The base portion may be any geometric shape but in a preferred embodiment is a truncated hollow cone with a flat top.

A liquid dispersal portion is attached to a base portion with one end of a hose or pipe connected to the bottom of the liquid dispersal portion.

A nozzle portion is attached to the top of the liquid dispersal portion and the other end of the hose or pipe is connected to an external liquid supply. The base portion is then placed on top of earth and/or soil at ground level.

A flow of liquid is directed through the hose or pipe vertically through the liquid dispersal portion to the nozzle portion. The vertical flow of liquid is altered to flow horizontally within the nozzle portion, which is altered again to flow downward. The flow of liquid us altered yet again to flow at an angle 360° about the circumference of a nozzle portion sloped flange, which disperses the downward flow of liquid on top of, over and across the sloped surface of the base portion through a plurality of base portion channels to plants growing in the plant growth zones spaced about the base portion.

As liquid is dispersed from the nozzle portion, it flows through spillways between arched shaped channels. The channels are designed to collect and direct the flow of liquid equally to plant growth zones spaced about the periphery regardless of whether the base portion is resting level or not.

Liquid is dispersed downward rather than up, over where plants may be grown. Dispersing liquid in a downward direction in a 360° spray pattern is a more efficient way to disperse liquid to plants. Water is saved and the threat of waterborne disease minimized or eliminated all together because water is dispersed underneath the plant canopy to the top root of each plant growing in each plant growth zone around the base portion.

The nozzle portion may be any geometric shape or dimension.

Any portion may be manufactured from a variety of materials including, without limitation, plastics, metals, glass and/or carbon fibre.

Growing plants in a circle or concentric circles about the irrigation device is a more efficient way to grow and water plants. Rows, patches or blocks of plants require much more space and require more water. Spillways spaced about the device sidewall govern the flow of liquid and nutrient to plant growth zones where a greater degree of sidewall slope increases liquid flow and the square area of a plant growth zone and a lesser degree of sidewall slope decreases liquid flow and the square area of the plant growth zone.

Rate of flow and flow duration also determine the size of a plant growth zone and/or plant growth area.

In a preferred embodiment, one or more spillways direct a flow of water and nutrient to one or more plant growth zones with at least one plant growth zone inline and adjacent with at least one spillway. Plant growth zones are next to and/or overlapping one another and any plant growth zone may be any size and shape.

At least one organism grows in at least one plant growth zone and at least one organism comprises a seed and/or plant, and/or a leaf, and/or a stem, and/or a root.

In one embodiment, a plurality of plants are grown spaced a distance from one another on top of, inside or outside the circumference of at least one circle configured within the plant growth area. In a preferred embodiment, the plant growth area comprises a plurality of circles to grow plants, one circle inside the other, each circle spaced a distance from another creating concentric circles about the device, the plants spaced a distance from one another about the circumference of each circle and/or within each circle at least partially.

In another embodiment, a plurality of plants are grown in one circle or concentric circles about the device, the plants spaced a distance from one another about the circumference of each circle and/or within each circle at least partially.

Any circle may be closed or open and the circumference of any circle undulated. An undulated circle configured at the outer edge of the plant growth area would provide additional space between plants. The space between plants also may provide access to plants growing in circles closer to the centre of the plant growth area.

In yet another embodiment, a plurality of plants are grown in a spiral with plants spaced a distance from one another about the curve of the spiral. The space between the spiral curves can be dimensioned to allow for the growth of larger plants and access for harvesting plants such as vegetables, herbs and flowers. Plants are grown spaced a distance from one another on top of, inside or outside the curve of the spiral shape configured within the plant growth area.

A spiral is a curve, which emanates from a point, moving farther away as it revolves around the point. Plants can be planted outside, inside, on top of or between the curves of the spiral. Any spiral type may be configured within the plant growth area including an Archimedean spiral, a logarithmic spiral or a Cornu spiral to name a few.

Weed growth is a common problem for gardeners and farmers alike. Undesirable weed growth competes for nutrients at the expense of the more desirable plants often curtailing plant development, fruit size and production.

A non-translucent cover manufactured from plastic or cloth may be used to suppress weed growth. The plant growth area is covered with the cover, and is manufactured a dark colour to attract heat from the sun. The cover may be permeable or non-permeable. Openings are cut into the cover to facilitate the insertion and planting of desirable plants. The openings may be configured in any geometric shape or pattern including a spiral, circle or plurality of circles.

In some embodiments, the growth area is covered with a translucent cover material manufactured from plastics and/or cloth. The cover material typically covers the cover and protects plants from insect, bird and small animal damage. The cover allows for the passage of heat, sunlight and liquid to the plants growing underneath and creates a greenhouse like growing environment. The cover material can be perforated or non-perforated. Creating this type of growing environment decreases the amount of time usually required for seed germination and increases plant growth.

In a preferred embodiment, at least one channel is configured without a cover wall so a hose and/or pipe may be inserted into the interior of the base portion. The hose and/or pipe has two ends with one end of the hose and/or pipe configured with a receptacle, which attaches to the liquid dispersal portion and the other end configured with a receptacle that attached to an external water supply.

In one embodiment, an elbow portion is connected to the liquid dispersal portion lower part, the elbow configured at an acute angle. A channel is configured through the centre of the fitting for the pass through of liquid. The elbow has two ends; one end configured to attach to the liquid dispersal portion lower part and the other end configured to attach to a pipe, hose or fitting.

The pipe, hose or fitting end is preferably aligned with the channel arch that features the opening at the end for the insertion of a pipe or hose.

In one embodiment, a perimeter wall is configured at the bottom edge of the base portion, the perimeter wall top edge connected to the base portion bottom edge outermost edge. The perimeter wall may be vertical or sloped any direction and be any dimension.

The perimeter wall is designed to rest upon or at least partially insert into a growth medium contained within a plant container or earth and/or soil at ground level to at least partially prevent dislodgement or removal from wind blow.

All plants and in particular, plants that grow best with flood type irrigation can be grown in a trench created about the periphery of the device. A plant growth area is created by first by levelling the soil. The plant growth area should be large enough to accommodate the spreading habit of the plants.

An area is created by tracing out two circles; one inside the other using two stakes and a string or cord. The stakes can be wooden, plastic or metal. And the sting is linear having two ends. Tying one end of the string or cord to the top of one stake and tying the other end of the sting or cord to the other stake will create a device that can be used to trace out the two circles in soil around the irrigation device.

Inserting the first stake into the ground at the centre of the plant growth area and pulling the second stake away from the first stake until the string is taunt will set the radius of the first circle. Pulling the second stake around the first stake so the tip of the second stake inserts into the soil at least partially will trace the outline of the first circle. Keeping the string or cord taunt during the tracing process will form a uniform circle.

Changing the shorter string for a longer length of string and repeating the circle tracing steps will draw the outline of the lager second circle outside the smaller first circle.

A trench is created by forming an earthen mound or dam on top of the outline of each of the two circles by moving soil from outside and inside each circle. Common tools such as a shovel or rake can be used to move the soil. The two earthen mounds or dams form a trench between them that help hold water where plants are grown and irrigated.

The interior of the first circle is filled with soil to the height of the earthen mound or dam and levelled. The filled first circle provides a base to rest the irrigation device upon.

In one embodiment, a plurality of open ended arch shapes are spaced about the outermost earthen mound or dam, at least one opening configured within the arch shape, one or more plants planted in the opening(s).

Covering the entire plant growth area will help supress weed growth. A portion of a non-translucent cover lies within the trench to supress such wed growth. Openings are cut into the weed barrier cover in any geometric pattern including a circle or concentric circles in the non-translucent cover within the trench, the openings spaced a distance from one another about the circumference of each circle. The openings are large enough for a plant and small enough to prevent excessive weed growth around each plant.

In some embodiments, any opening may be further configured with one or more cut slits any dimension spaced about the perimeter edge of the opening. The cut slits allow for the penetration of the bulb of the onion through and above the weed barrier cover.

The non-translucent cover can be held down in place over top of the plant growth area with any variety of weighted objects such as a brick, block or stone to prevent removal from wind blow. Metal or plastic pins commonly in use can be used as well.

A liquid dispersal portion is attached to the base portion of the irrigation device in preparation to water plants growing in the trench. One end of a hose is inserted through the opening provided in one of the base portion channels and connected to the lower part of the liquid dispersal portion. The other end of the hose is connected to an external water supply.

The irrigation device is then placed at the centre of the plant growth area inside the first circle on top of the non-translucent cover. Seeds or plants are planted in the non-translucent cover openings within the trench. A spray nozzle may be attached to the liquid dispersal portion and utilized for delicate transplants or until the seeds germinate. The spray nozzle is replaced with the nozzle portion once the plants have strengthened and are able to withstand the flow of water that is dispersed periodically from the irrigation device to fill the trench between the earthen mounds or dams and flood irrigate the plants.

Plants grown in a spiral, circle or concentric circles are healthier and grow significantly faster than plants grown in rectangular patches or linear rows. Plants can be planted on top of, inside or outside the circumference of a spiral, one circle or a plurality of circles spaced a distance from one another. Plants growing spaced around each circle may be watered using any type of watering apparatus placed at the centre of the inner most circle or anywhere within the plant growth area however, the irrigation device placed at the centre of the inner most circle will benefit more plants and significantly save more water.

In another embodiment, the watering apparatus comprises a soaker or dripper hose, either hose laid about the curve of spiral or circumference of any circle.

A soaker hose that allows water to "seep" or "weep" very slowly. It allows water to seep into the soil very slowly instead of running off. A dripper hose is part of a drip irrigation system that saves water and fertilizer by allowing water to drip slowly to the roots of many different plants, either onto the soil surface or directly onto the root zone, through a network of valves, pipes, tubing, and emitters.

A watering device is located at the centre of the first circle or spiral. In one embodiment, an underground pipe provides a vertical pipe riser with a receptacle attachment. A circular plant growth area around the vertical pipe is prepared, which may include tilling, fertilizing and levelling. A plastic or rubber weed barrier is laid out over the plant growth are on top of the soil and weighted or pinned to prevent removal from wind blow.

One end of a soaker hose or dripper hose is connected to the vertical pipe receptacle. The remaining length of hose is wound around the vertical pipe in a circle, concentric circles or a spiral formation on top of the weed barrier. The hose can sit freely or be fastened in place using clips pushed through the weed barrier and into the soil.

In one embodiment, a second watering apparatus is connected to the outer end of the soaker or dripper hose. In this way, water is supplied from both hose ends to plants growing directly underneath and/or adjacent to either hose. A watering apparatus attached to each end of a hose also provides for a more even distribution of water to plants growing along the hose. Plants growing near an outer end of a hose would receive water much quicker with a second watering apparatus connected to that end of the hose.

A circular shaped trench can also be created by using a template configured the shape of any one or both circles. Placing the template on top of the soil and then tracing an outline the circles by hand in the soil around the template creates the outline for the earthen mounds or dams with the trench there between. The template can also be covered with soil to the height of the earthen mound or the earthen dam. Preferably, a covered template would be biodegradable.

A mechanical device can also be used to create the circle tracings in soil.

Plants can grow extensive root systems in search of liquid and nutrient. Some plants such as oak trees or broccoli plants grow long tap roots to reach water that is deeper under ground, while some plants such as maple trees and pepper plants grow wider roots shaped like a ball, which also help give the plant stability. Root growth may be inhibited growing plants in a circle(s). A predictable and consistent supply of liquid from the centre of the circle provides enough nutrients to inhibit root growth diminishing the length of a taproot or the width of a root ball.

A higher density of plants per square foot are grown about the device compared to other plant growing methods due to a more or less even distribution of water and nutrient, trench irrigation and circle or concentric circle planting patterns. This saves water and space, while being more productive.

In yet another embodiment, the base portion joins with a plant container comprising an outer wall, the plant container filled with a growth medium. The base portion may be any geometric shape but is preferably an inverted bowl shape configured having a wall encompassing the lower perimeter edge. The base portion inserts at least partially into the growth medium at the approximate top centre of the plant container. A space is created to grow plants between the base portion wall and the plant container outer wall. A depressed area is created within the space by moving growth medium from the center of the space up against the circumference of the base portion wall and circumference of the plant container outer wall. This creates a trench to flood irrigate plants, the trench comprised of two raised growth medium dams configured about the outer and inner circumference of the circle shaped space. The base portion may be with or without an aperture or without a liquid dispersal portion configured at the top centre. In some embodiments, the base portion may be configured with or without one or more channels or spillways, particuarily if the base portion is configured a small size.

Water and nutrient have a tendency to drain from a plant container before plants can use them. This is often due to a space that forms between the outer wall of the plant container and the growth medium. The space is created when growth medium shrinks as it hardens. Water and nutrient dispersed to plants typically flow across the surface of the growth medium into the space, down the side and out of the plant container through drain holes. As a result, plants quickly become root bound.

Creating a depression within the growth medium is the first step to addressing this problem. A garden tool can be used to shape the depression on top of the growth medium and form a raised mound around the circumference of the depression to create a trench. The raised mound prevents water and nutrient from flowing into the space between the plant container outer wall at least partially inhibiting plants from becoming root bound.

The non-translucent cover facilitates the flow of water, which increases the potential width of the trench. The wider the trench, the more plants can be grown. The non-translucent cover also inhibits evaporation allowing the soil to hold moisture for longer periods of time. As a result, plants require irrigation less often, which saves water.

A non-translucent cover of colour reflects light to induce more flowering and blossom set. A cable comprising a plurality of lights may be laid under one or more circles of plants to induce flowering, fruit set or to add night time decoration.

The plant growth area with or without the non-translucent cover may be covered with a cover material. The cover material disposed to protect the plants from damage caused by insects, birds and small animals. The cover material may be non-perforated or perforated but is preferably perforated to allow for the penetration of liquid dispersed from above. The cover material is translucent to allow for the passage of sunlight to aid in plant seed germination. The cover material is further disposed to collect heat from the sun and may be fabricated from a variety of materials including plastics and cloth.

### Brief Description of the Drawings.

The present invention is illustrated by way of example, and not by way of limitation, in the figures of the accompanying drawings and in which like reference numerals refer to similar elements and in which:
Figure 1 illustrates a detailed perspective view of an exemplary base portion showing flat top with opening, in accordance with an embodiment of the present invention;
Figure 2 illustrates a detailed top view of an exemplary base portion showing channels and spillways, in accordance with an embodiment of the present invention;
Figure 3 illustrates a detailed bottom view an exemplary base portion showing arch end cover walls, in accordance with an embodiment of the present invention;
Figure 4 illustrates a detailed side view an exemplary base portion showing channel pipe and/or hose opening, in accordance with an embodiment of the present invention;
Figure 5 illustrates detailed sectioned view of an exemplary base portion, in accordance with an embodiment of the present invention;
Figure 6 illustrates a detailed top view of an exemplary plant zone, in accordance with an embodiment of the present invention;
Figure 7 illustrates a detailed perspective view of an exemplary dispersal portion showing upper part and lower part separated by a flange and a first fixed nut below the flange, in accordance with an embodiment of the present invention;
Figure 8 illustrates a detailed perspective view of an exemplary dispersal portion illustrating rotating nut portion sowing flange and second fixed nut portion, in accordance with an embodiment of the present invention;
Figure 9 illustrates an exploded view of an exemplary liquid dispersal portion above rotating nut portion, in accordance with an embodiment of the present invention;
Figure 10 illustrates an assembled view of an exemplary liquid dispersal portion joined with the rotating nut portion, in accordance with an embodiment of the present invention;
Figure 11 illustrates a detailed perspective view of an exemplary nozzle portion showing cover top, in accordance with an embodiment of the present invention;
Figure 12 illustrates a detailed side view of an exemplary nozzle portion showing outer casing with a plurality of ridges spaced about the sidewall outer surface, in accordance with an embodiment of the present invention;
Figure 13 illustrates a detailed perspective view of an exemplary nozzle portion showing connecting aperture, in accordance with an embodiment of the present invention;
Figure 14 illustrates a detailed sectioned view of an exemplary nozzle portion showing outer casing, liquid dispersal chamber, inner casing with angled flange, liquid collection chamber, connecting aperture, and direction of a liquid flow, in accordance with an embodiment of the present invention;
Figure 15 illustrates a detailed side view of an exemplary nozzle portion attached to an exemplary liquid dispersal portion with an exemplary rotating nut portion joined with an exemplary dispersal portion, in accordance with an embodiment of the present invention;
Figure 16 illustrates a perspective view of an exemplary base portion joined with an exemplary liquid dispersal portion attached to an exemplary nozzle portion, in accordance with an embodiment of the present invention;
Figure 17 illustrates a side-sectioned view of an exemplary base portion joined with an exemplary liquid dispersal portion joined with an exemplary nozzle portion with a hose attached to the liquid dispersal portion lower part; in accordance with an embodiment of the present invention;
Figure 18 shows a top view of an exemplary base portion showing plants growing in plants growth zones spaced about the periphery of the device, in accordance with an embodiment of the present invention;
Figure 19 shows a detailed side view of a plant support joined with an exemplary base portion; in accordance with an embodiment of the present invention and;
Figure 20 shows a detailed top view of exemplary concentric circles with exemplary plant openings within an exemplary flood irrigation trench configured about an exemplary irrigation device; in accordance with an embodiment of the present invention.

### Detailed Description of Some Embodiments.

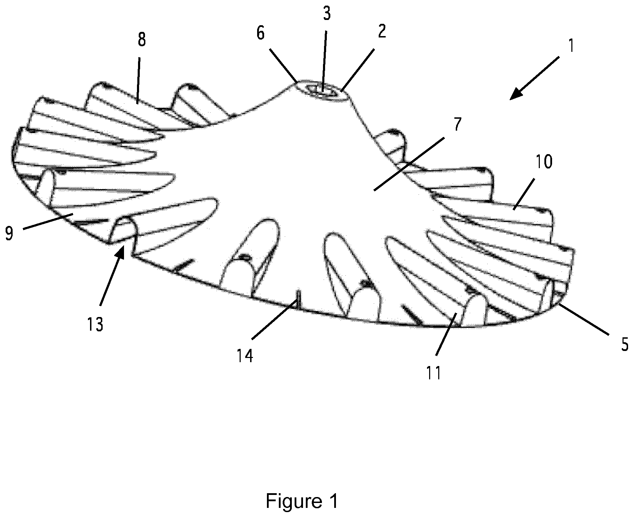

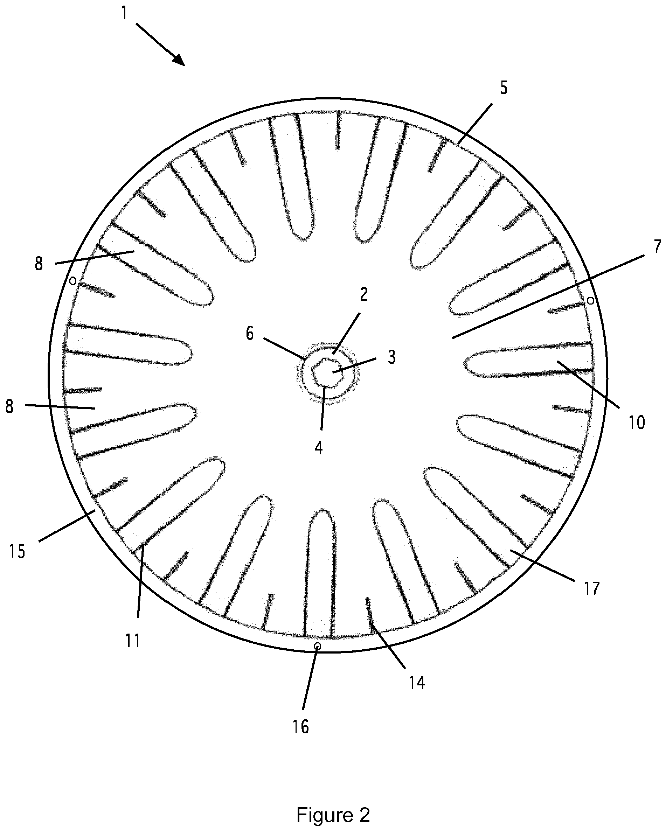

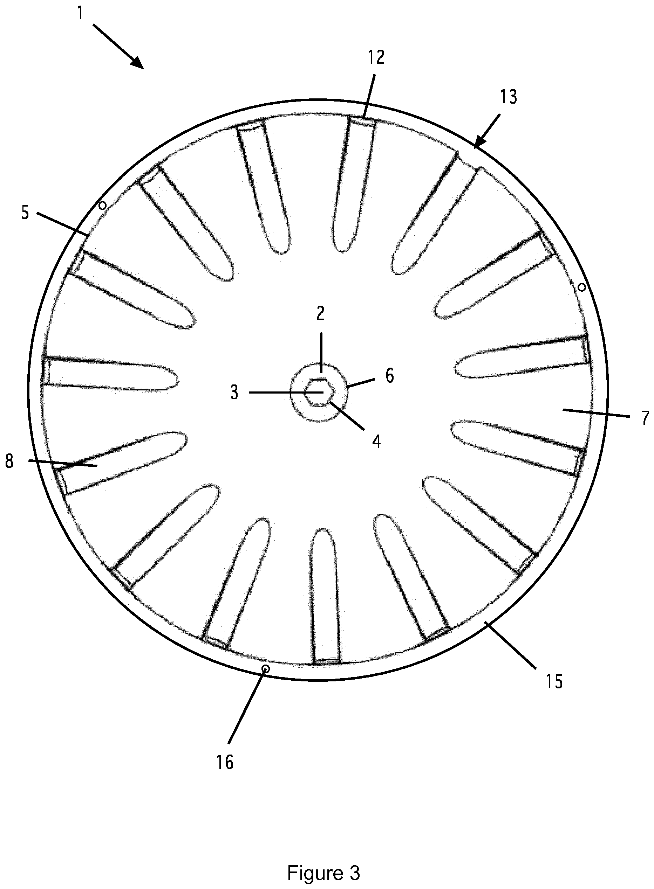

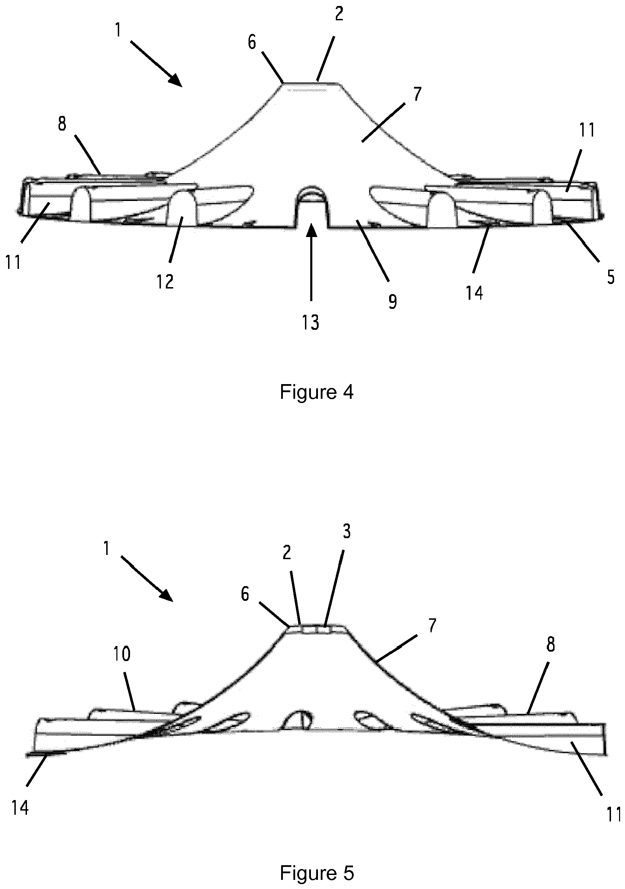

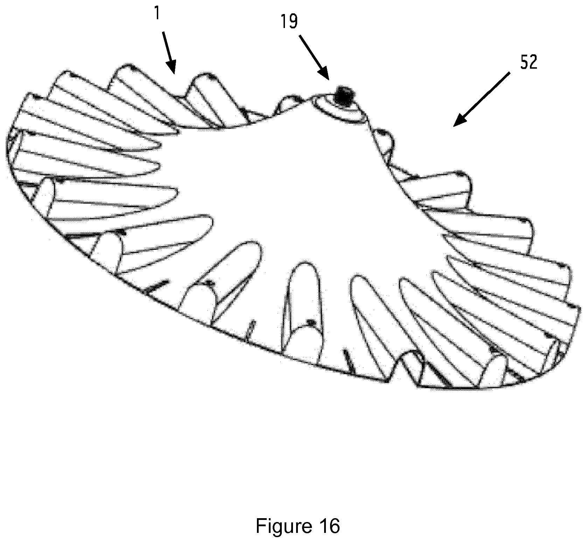

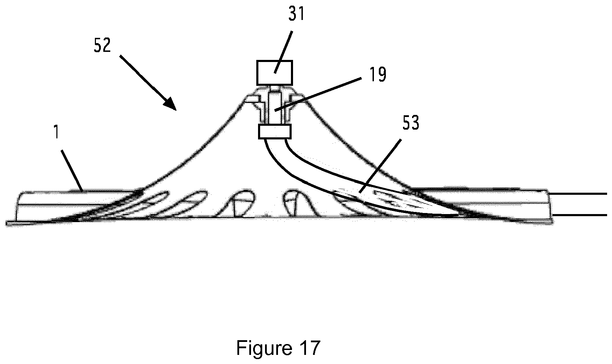

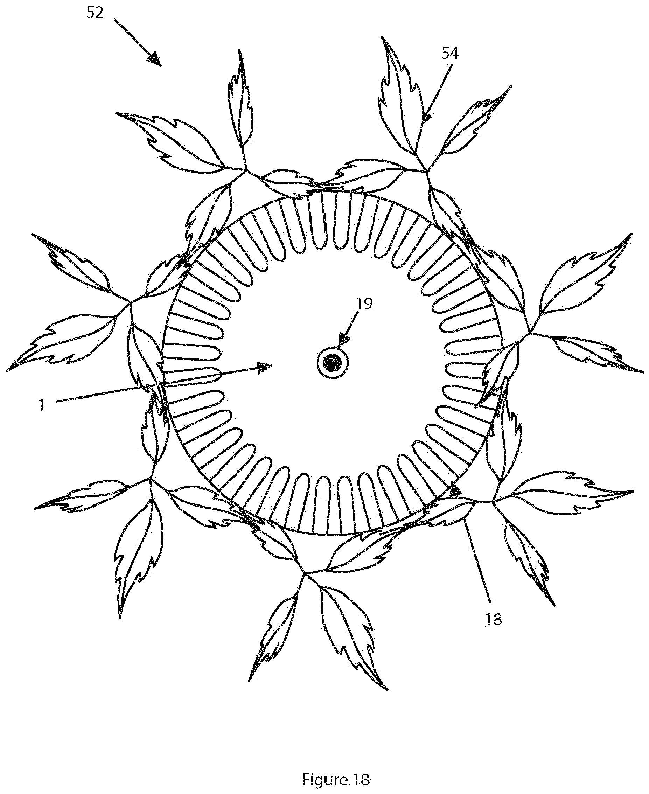

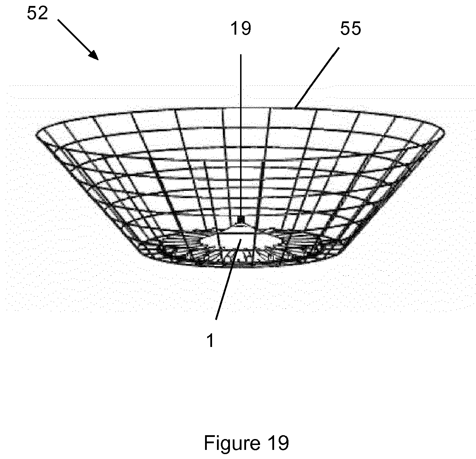

Figures 1, 2, 3, 4, 5, 6, 16, 17, 18, 19 and 20 illustrate various views of an exemplary base portion 1, in accordance with an embodiment of the present invention.

The base portion 1 is substantially a truncated hollow cone with a flat top 2, the flat top 2 planar with an aperture 3 at the centre.

The aperture 3 comprising three or more sidewalls 4, the aperture 3 may be any shape or size.

A bottom edge 5 is configured at the lower perimeter of the base portion 1 and a top edge 6 is configured at the outer perimeter of the flat top 2 with a sloped surface 7 between the bottom edge 5 and the top edge 6.

A curved or sloped surface 7 facilitates a flow of water.

A spillway 9 is configured between two channels 8.

Each channel 8 is configured an arch shape 10 but may be any shape or profile. The channel is closed at the top and open at the bottom comprising at least one sidewall. A vertical or sloped cover wall 12 is configured at one end of the channel.

At least two channels 8 and one spillway 9 is configured at any point between the base portion bottom edge 5 and the flat top outer edge 6 the two channels designed to direct a flow of liquid into at least one spillway 9.

At least one spillway 9 directs a flow of water and nutrient a plant growth zone 18, one plant growth zone 18 adjacent and inline with at least one spillway 9.

A plurality of plant growth zones 18 are configured about the periphery of the base portion 1 and may be of any size and shape, one plant growth zone 18 next to another plant growth zone 18. One plant growth zone 18 may overlap another plant growth zone 18 in use.

At least one channel 8 may be configured without a cover wall 12 so a hose 53 and/or pipe may be inserted through an opening 13 at one arch end into the interior of the base portion 1. One end of the hose and/or pipe is configured with a receptacle disposed to attach to a liquid dispersal portion 19 and the other end of the hose and/or pipe configured with a receptacle that attaches to an external water supply.

A planar flange 15 encompasses the bottom edge 5 of the base portion 1. One or more openings 16 are spaced about the flange for the insertion of fasteners such as a nail or spike. The base portion is placed on top of the ground and a fastener is inserted through the opening into the ground to secure the base portion in place.

In some embodiments, a ledge 17 in configured on top of at each arch end above the cover wall. The indentation provides structural strength for the end of each arch and provides a surface in which to support a variety of plant supports 55 including plant trellises.

A stub wall 14 may be configured anywhere within a spillway 9. The sub wall 14 is to provide separation when one base portion 1 is inserted into another for economical shipping.

A liquid dispersal portion 19 is configured at the top centre of the base portion 1 to disperse water to 37 growing in plant growth zones around the periphery of the device.

A support portion may join with the base portion to support plants; part of the support portion rests upon the flange thereby holding the base portion in place upon the ground.

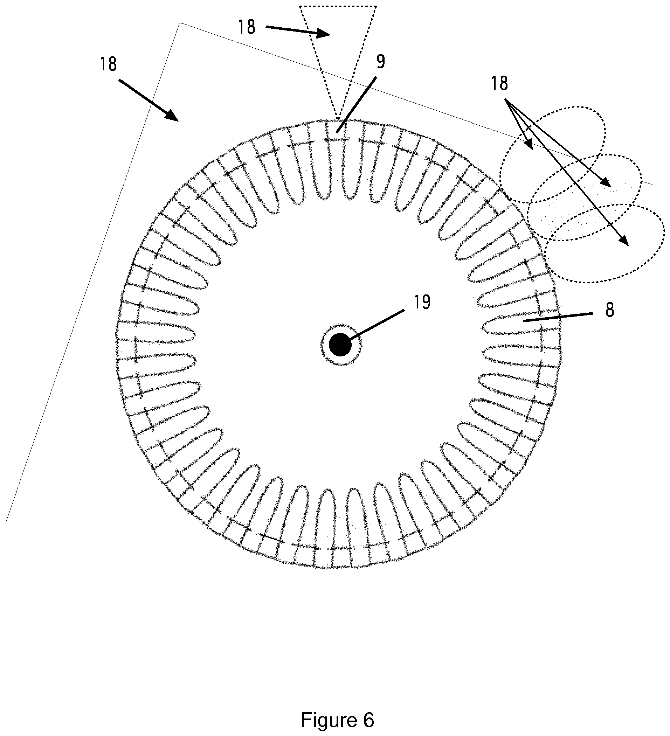

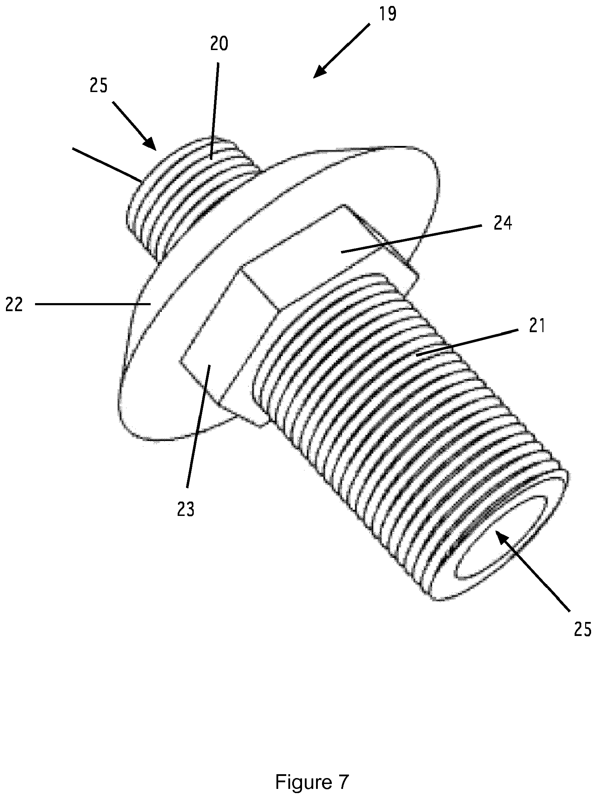

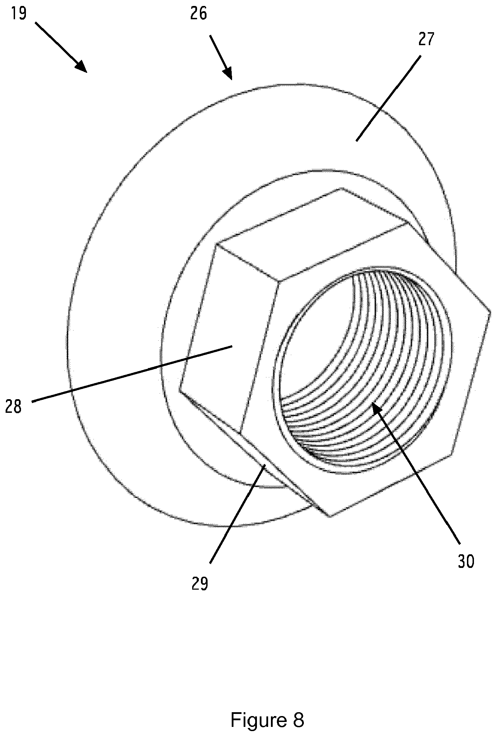

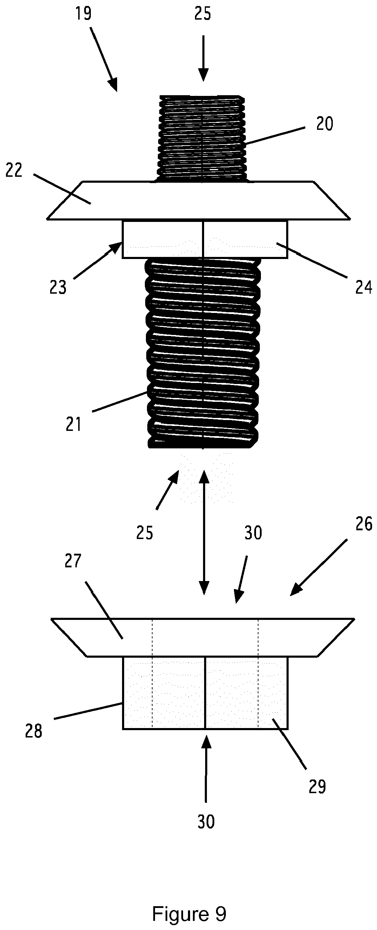

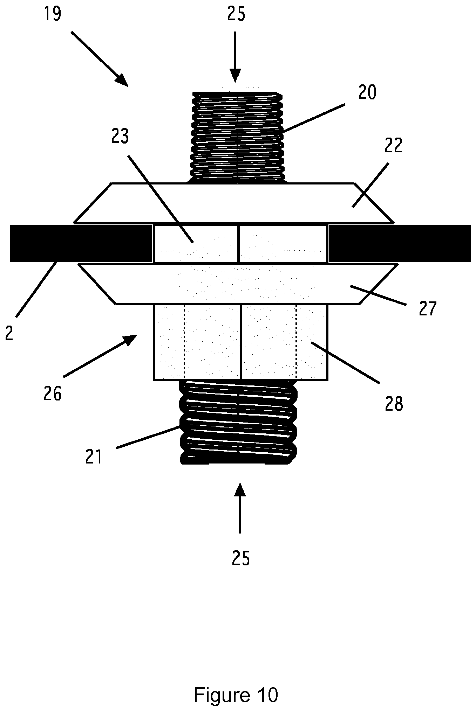

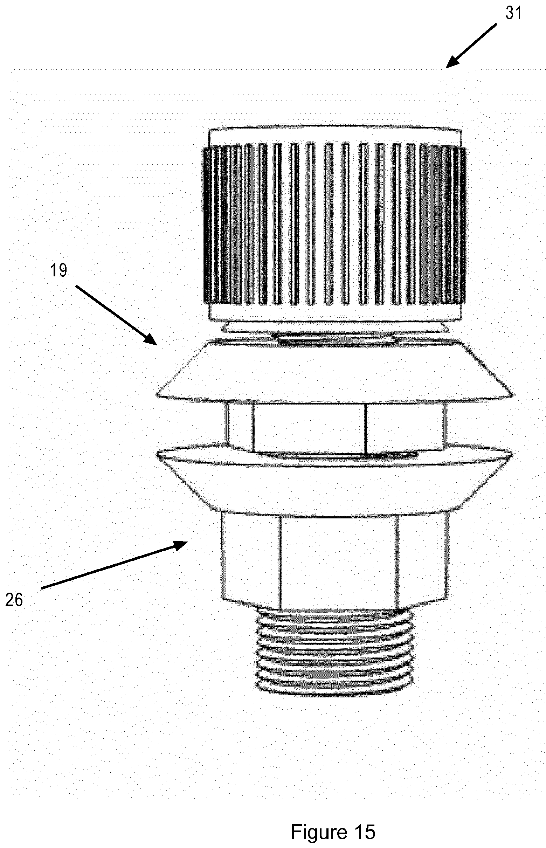

Figures 6, 7, 8, 9, 10, 15, 16, 17, 18, 19 and 20 illustrate various views of an exemplary liquid dispersal portion 19, in accordance with an embodiment of the present invention.

In a preferred embodiment of the present invention, the liquid dispersal portion 19 comprises an upper part 20 and a lower part 21.

A flange portion 22 and a first fixed nut portion 23 are configured between the upper part 20 and lower part 21. The flange portion 22 encompasses the liquid dispersal portion 19 above the first fixed nut portion 23. The flange portion 22 is a larger dimension than the first fixed nut portion 23 so it will rest upon the base portion 1 flat top 2. The flange portion 22 is preferably circle shaped but can be any shape or profile. The upper part, lower part, flange portion and first fixed nut portion are one piece and unitary.

The upper part 20 is configured to attach to a nozzle to disperse water in various ways including trickle, drip, spray and bubble. The lower part 21 is configured to attach to a hose 53 or pipe, which delivers water 37 from an external source.

The interior of the liquid dispersal portion 19 is configured with a channel 25 throughout open from top to bottom. The channel 25 may be any shape or size and is configured to pass through liquid and nutrient dispersed from the hose or pipe to the nozzle.

The first fixed nut portion 23 is configured with three or more sidewalls 24 any shape or size.

The first fixed nut portion 23 is configured to insert into the flat top 2 opening 3 with at least one first fixed nut portion 23 sidewall 24 adjacent to a flat top 2 opening 3 sidewall 4 of corresponding size and shape. The alignment of at least one first fixed nut portion 23 sidewall 24 next to at least one corresponding flat top 2 opening 3 sidewall 4 is disposed to inhibit the rotation of the liquid dispersal portion 19 in use.

The flange portion 22 is configured on top of the first fixed nut portion 23. The flange portion 22 is a larger dimension than the first fixed nut portion 23 and any shape or profile.

A rotating nut portion 26 attaches the liquid dispersal portion 19 to the base portion 1. The rotating nut portion 26 is one piece and unitary comprising a flange portion 27 configured on top of a second fixed nut portion 28. The interior of the rotating nut portion is configured with a channel 30 throughout open from top to bottom. The channel 30 may be any shape or size and is configured to attach to the lower part of the liquid dispersal portion 19.

The second fixed nut portion 28 of the rotating nut portion 26 is configured with three or more sidewalls 29 any shape or size.

The flange portion 27 is configured at the top of the second fixed nut portion 28 and a larger dimension than the second fixed nut portion 28. The flange portion 27 may be any shape or profile.

The upper part 20 inserts into the flat top 2 opening 3 of the base portion 1 so the first fixed flange portion 22 rests upon the flat top 2 and the first fixed nut portion 23 is inside the flat top 2 opening 3 and the first fixed nut portion 23 sidewalls 24 are next to the flat top 2 opening 3 sidewalls 4.

The rotating nut portion 26 attaches and joins with the liquid dispersal portion 19 lower part 21. The rotating nut portion 26 is rotated upward until the top of the rotating nut 26 flange 27 rests against the underside of the flat top 2. The union of the two secures the liquid dispersal portion 19 to the base portion 1.

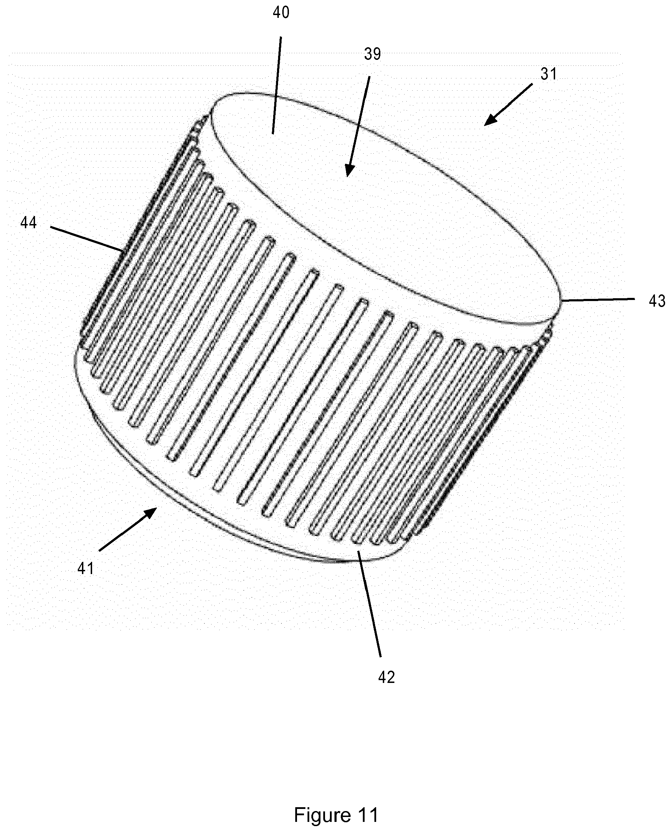

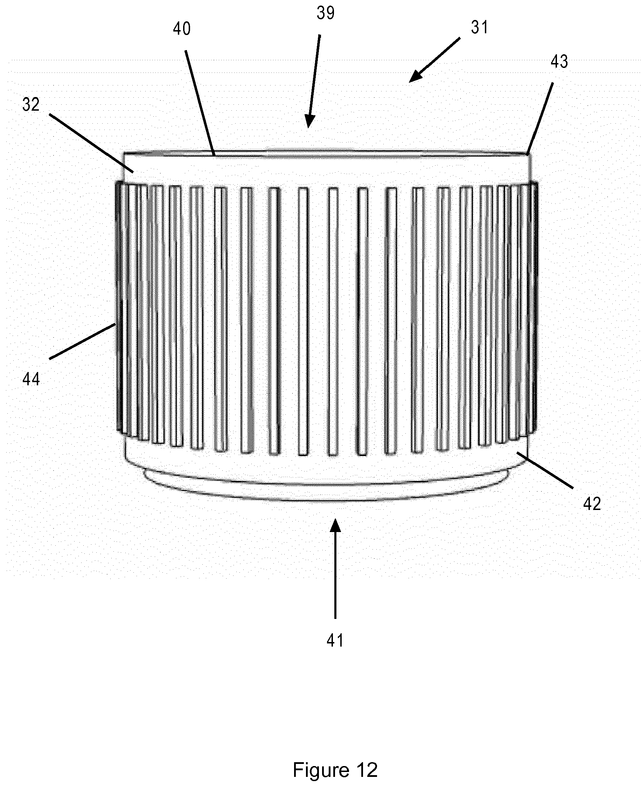

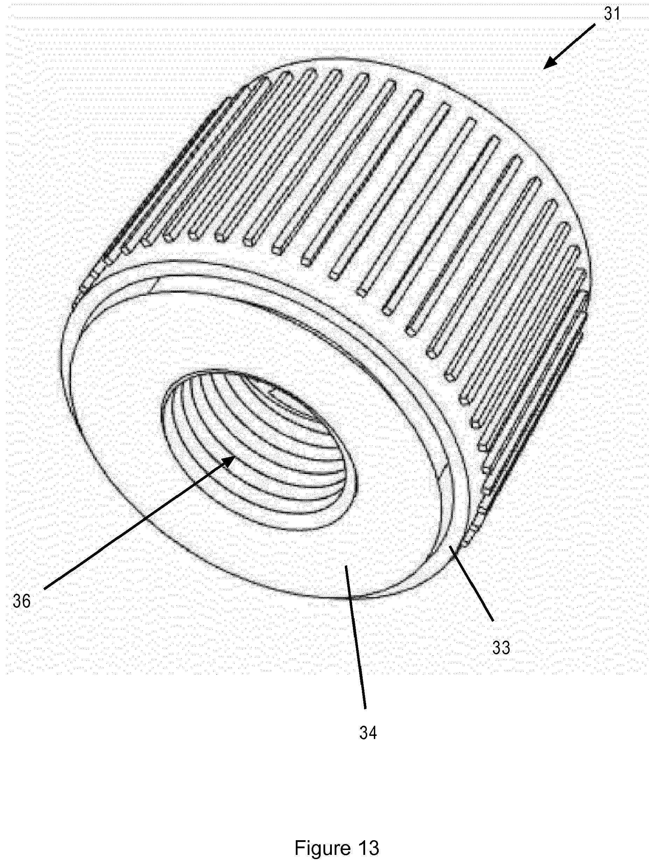

Figures 11 through 20 illustrate various views of an exemplary nozzle portion 31, in accordance with an embodiment of the present invention.

The nozzle portion 31 is disposed to attach to and join with a liquid dispersal device, the liquid dispersal device any type threaded or unthreaded end of pipe, fitting or hose but preferably attaches to a liquid dispersal portion 19.

The nozzle portion 31 comprises an outer casing 32, a liquid dispersal chamber 33, an inner casing 34, a liquid collection chamber 35 and a connecting aperture 36.

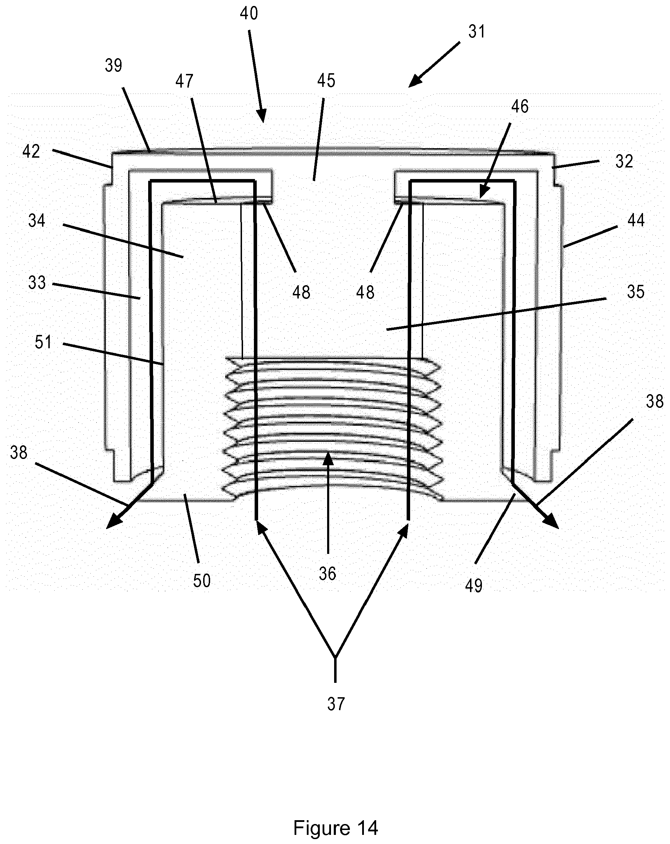

The nozzle portion 31 is configured to disperse liquid 37 onto, over and across the base portion 1 to plants growing in a plurality of plant growth zones 18 spaced about the periphery of the base portion 1. The nozzle portion 31 alters the directional flow 38 of the liquid 37 as illustrated in Figure 14.

The outer casing 32 is substantially a cover 39, the cover 39 any geometric shape or dimension but is preferably a closed circle shape with a closed cover top 40 and open bottom 41. The cover top 40 is substantially planar.

A sidewall 42 encompasses the cover top 40 outer edge 43 to form an enclosure. The sidewall 42 may be vertical or sloped any direction. The cover top 40 encloses the inner casing 34 creating a space between them the liquid dispersal chamber 33.

In a preferred embodiment, a plurality of ridges 44 are spaced about the sidewall 42 outer surface, the ridges 44 vertical, angled or sloped extending out beyond the sidewall 42 outer surface. The ridges 44 provide a textured surface to at least partially prevent slippage when turned mechanically by a tool or manually by hand.

The inner casing 34 comprises a spacer 45, a ledge 47, the liquid collection chamber 35, a sloped flange 49 and the connecting aperture 36. The spacer 45 is configured at the top centre of the inner casing 34 under the cover top 40 forming a space 46 there between. The spacer 45 is dimensionally smaller than the inner casing 34 forming the ledge 47. The ledge 47 may be sloped or planar. A plurality of openings 48 spaced about the ledge 47, the openings 48 through the ledge 47 to the liquid collection chamber 35 contained within the inner casing 34.

The liquid collection chamber 35 is configured between the spacer 45 and the connecting aperture 36 and may be any geometric shape or dimension. The connecting aperture 36 may be threaded or non-threaded and is configured to attach to the liquid dispersal portion 19, common irrigation fitting, pipe or hose.

A sloped flange 49 encompasses the inner casing 34 lowermost perimeter edge 50. The sloped flange 49 may be any degree of angle sloped down and away from the inner casing wall 51. The sloped flange 49 is disposed to disperse liquid 37 at said flange angle.

The liquid collection chamber 35 is disposed to channel liquid 37 through the ledge 47 openings 48 into the liquid dispersal chamber 33.

The distance of the space between the outer casing and the inner casing also governs the flow of a liquid. The greater the space the more flow; the smaller the space the less flow of a liquid.

As illustrated in Figure 14, a flow of liquid 37 rises vertically within the liquid collection chamber 35 through ledge 47 openings 48 into the liquid dispersal chamber 33. The flow direction of the liquid is changed from vertical to horizontal as the liquid comes into contact with the top interior of the outer casing 32. The flow direction of the liquid is changed again from a horizontal flow to a downward flow when it contacts the interior surface of the outer casing 32 sidewall 42. The downward flow is altered again by the sloped flange 49, the liquid 37 cascading at an angle over the sloped flange 360 degrees about the circumference of the sloped flange 49.

Figures 6, 10, 14, 15, 16, 17, 18, 19 and 20 illustrate various views of exemplary irrigation device assemblies 52, in accordance with an embodiment of the present invention.

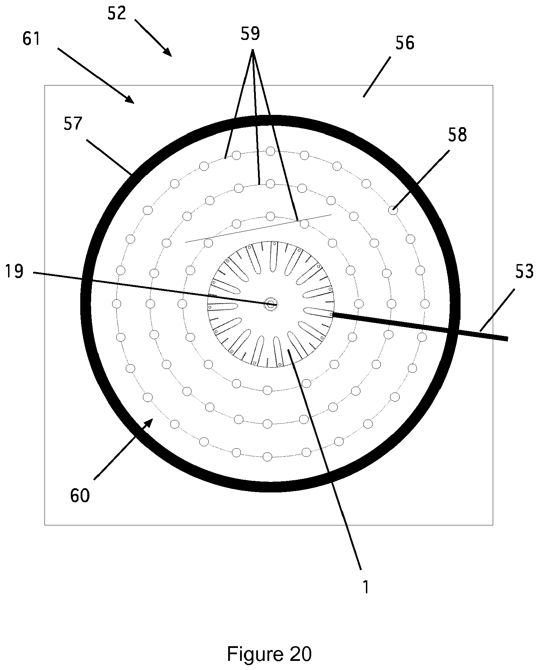

Figure 20 shows a plant growth area 61 with concentric circles 59 of openings 58 for plants cut out of a non-translucent cover 56. A hose 53 is connected to a liquid dispersal portion 19 attached to the top centre of the irrigation device 1. An earthen mound or dam 57 encompasses the concentric circles forming the outer perimeter of the trench 60.

Those skilled in the art will readily recognize, in light of and in accordance with the teachings of the present invention, that any of the foregoing steps may be suitably replaced, reordered, removed and additional steps may be inserted depending upon the needs of the particular application. Moreover, the prescribed method steps of the foregoing embodiments may be implemented using any physical and/or mechanical system that those skilled in the art will readily know is suitable in light of the foregoing teachings. Thus, the present invention is not limited to any particular tangible means of implementation.

All the features disclosed in this specification, including any accompanying abstract and drawings, may be replaced by alternative features serving the same, equivalent or similar purpose, unless expressly stated otherwise. Thus, unless expressly stated otherwise, each feature disclosed is one example only of a generic series of equivalent or similar features.

Having fully described at least one embodiment of the present invention, other equivalent or alternative methods of plant support according to the present invention will be apparent to those skilled in the art. Various aspects of the invention have been described above by way of illustration, and the specific embodiments disclosed are not intended to limit the invention to the particular forms disclosed. The particular implementation of a base portion joining a liquid dispersal portion, which joins a nozzle portion to water plants growing in plant growth zones about the device may vary depending upon the particular context or application. By way of example, and not limitation, an irrigation device comprising a base portion, a liquid dispersal portion and a nozzle portion described in the foregoing were principally directed to the efficient watering and intensive growth of plants; however, similar techniques may instead be applied to hydroponic or aeroponics plant growing systems, which implementations of the present invention are contemplated as within the scope of the present invention. The invention is thus to cover all modifications, equivalents, and alternatives falling within the spirit and scope of the following claims. It is to be further understood that not all of the disclosed embodiments in the foregoing specification will necessarily satisfy or achieve each of the objects, advantages, or improvements described in the foregoing specification.

## Claims

1. An irrigation device, comprising: a base portion (1) and a liquid dispersal portion (19), the base portion (1) any geometric shape but preferably is a truncated hollow cone with a flat top (2), the flat top (2) planar with an aperture (3) any shape or size at the centre, the aperture (3) for the insertion of an irrigation pipe or hose (53), the aperture (3) configured for the attachment of the liquid dispersal portion (19), the aperture (3) comprising three or more sidewalls (4), a bottom edge (5) configured at the lower perimeter of the base portion (1), a top edge (6) configured at the flat top (2) perimeter, a sloped or curved surface (7) between the bottom edge (5) and the top edge (6), the base portion (1) wider at the bottom than the top to provide stability in use, a plurality of channels (8) configured anywhere on the base portion (1) slope (7), the channels (8) arch shaped (10) but can be any shape or profile, the channels (8) closed at the top and open at the bottom with a cover wall (12) configured at each end, one channel (8) configured without the cover wall (12) so a hose (53) and/or pipe may be inserted into the interior of the base portion (1), the hose (53) and/or pipe having two ends, one end of the hose (53) and/or pipe configured with a receptacle, the receptacle disposed to attach to the liquid dispersal portion (19), the other end configured with a receptacle disposed to connect to an external water supply, a spillway (9) between each channel (8), a flange (15) configured about the perimeter of the base portion (1) bottom edge (5), the flange (15) substantially planar, one or more openings (16) spaced about the flange (15), the openings (16) through the flange (15), a nail or spike inserts through any flange (15) opening (16) to secure the base portion (1) to earth and/or soil at ground level, the liquid dispersal portion (19) attached to the base portion (1) at the top centre to water plants (54) growing about the periphery of the irrigation device in plant growth zones (18) within a plant growth area (61), the plant growth area (61) any geometric shape but preferably a circle shape, a plant support (55) disposed to join with the base portion (1) to support plants (54).

2. The irrigation device as claimed in claim 1, wherein the liquid dispersal portion (19) waters plants (54) growing around the base portion (1) periphery, one or more spillways (9) direct a flow of liquid (37) and nutrient to one or more plant growth zones (18) with at least one plant growth zone (18) inline and adjacent with at least one spillway (9), one plant growth zone (18) next to and/or overlapping another, any plant growth zone (18) any size and shape, at least one organism grows in at least one plant growth zone (18) within a plant growth area (61) and at least one organism comprises a seed and/or plant (54), and/or a leaf, and/or a stem, and/or a root, the spillways (9) govern the flow of liquid (37) and nutrient the plant growth zones (18), the flow of liquid (37) governing the size and shape of the plant growth zones (18), a greater degree of slope (7) of the spillways (9) increases liquid (37) flow increasing the size and shape of the plant growth zones (18), a lesser degree of slope (7) of the spillways (9) decreases liquid (37) flow decreasing the size and shape of the plant growth zones (18).

3. The irrigation device as claimed in claim 1, wherein a plurality of plants (54) are grown in any geometric shape including, without limitation a spiral, one circle or concentric circles (59) about the irrigation device, the plants (54) spaced a distance from one another about the curve of the spiral, the circumference of each circle and/or within each circle at least partially, any circle open or closed and the circumference of any circle undulated.

4. The irrigation device as claimed in claim 1, wherein the base portion (1) joins with a plant container comprising an outer wall, the plant container filled with a growth medium, the base portion (1) any geometric shape but is preferably an inverted bowl shape, the base portion (1) with or without a channel (8) and/or a spillway (9), with or without an aperture, with or without a liquid dispersal portion (19) configured at the top centre, a wall encompasses the base portion (1), the wall vertical or sloped, the top edge of the wall connected to the base portion (1) bottom edge (5), the bottom edge of the wall straight, curved or undulated inserted at least partially into the growth medium at the approximate top centre of the plant container, a space created to grow plants (54) between the base portion (1) wall and the plant container outer wall, the space a depressed area created by moving growth medium from the center of the space up against the circumference of the base portion wall (1) and circumference of the plant container outer wall, the depressed space substantially a trench (60) disposed to flood irrigate plants (54).

5. The irrigation device as claimed in claim 1, wherein the liquid dispersal portion (19) comprises an upper part (20) and a lower part (21), the upper part (20) configured to attach to a nozzle, the nozzle configured to disperse liquid (37) in various ways including trickle, drip, spray and bubble, the lower part (21) configured to attach to a hose (53) or pipe, a flange portion (22) and a first fixed nut portion (23) between the upper part (20) and the lower part (21), the flange portion (22) encompassing the liquid dispersal portion (19) above the first fixed nut portion (23), the flange portion (22) a larger dimension than the first fixed nut portion (23), the flange portion (22) preferably circle shaped but can be any shape or profile, the upper part (20), the lower part (21), the flange portion (22) and the first fixed nut portion (23) one piece and unitary, the first fixed nut portion (23) configured with three or more sidewalls (24) any shape or size, the first fixed nut portion (23) configured to insert into the base portion (1) flat top (2) aperture (3), at least one first fixed nut portion (23) sidewall (24) adjacent to a flat top (2) aperture (3) sidewall (4) of corresponding size and shape, the alignment of at least one first fixed nut portion (23) sidewall (24) next to at least one corresponding flat top (2) aperture (3) sidewall (4), the alignment to inhibit the rotation of the liquid dispersal portion (19) in use, a channel (25) configured within the interior of the liquid dispersal portion (19), the channel (25) any shape or size open from top to bottom, the channel (25) disposed to pass through liquid (37) and nutrient from a hose (53) or pipe to the nozzle, a rotating nut portion (26) attaches to the liquid dispersal portion (19) lower part (21), the rotating nut portion (26) comprising a flange portion (27) and a second fixed nut portion (28), the flange portion (27) and second fixed nut portion (28) one piece and unitary, the flange portion (27) on top of the second fixed nut portion (28), the flange portion (27) a larger dimension than the second fixed nut portion (28), the flange portion (27) preferably circle shaped but can be any shape or profile, the second fixed nut portion (28) configured with three or more sidewalls (29) any shape or size, a channel (30) configured within the interior of the rotating nut portion (26), the channel (30) any shape or size open throughout from top to bottom, the channel (30) configured for the insertion of the liquid dispersal portion (19) lower part (21), the rotating nut portion (26) rotated upward over the liquid dispersal portion (19) lower part (21) to secure the liquid dispersal portion (19) to the base portion (1), an elbow portion connected to the liquid dispersal portion (19), the elbow configured at an acute angle of degree, a channel through the centre of the elbow portion, the channel for the pass through of liquid (37), the elbow portion having two ends, one end configured to attach to the liquid dispersal portion (19) lower part (21) and the other end configured to attach to a pipe, hose (53) or fitting.

6. The irrigation device as claimed in claim 1, wherein the liquid dispersal portion (19) comprises a nozzle portion (31), the nozzle portion (31) comprising an outer casing (32), a liquid dispersal chamber (33), an inner casing (34), a liquid collection chamber (35) and a connecting aperture (36), the nozzle portion (31) any geometric shape or dimension, the nozzle portion (31) configured to disperse liquid (37) onto, over and across the base portion (1) to plants (54) growing in plant growth zones (18), the nozzle portion (31) further configured to alter the directional flow of the liquid (37), the outer casing (32) is substantially a cover (39), the cover (39) any geometric shape or dimension but is preferably a closed circle shape with a closed top (40) and open bottom (41), the closed cover top (40) substantially planar, a sidewall (42) encompasses the closed cover top (40) outer edge (43) to form an enclosure, the sidewall (42) vertical or sloped, the cover (39) enclosing the inner casing (34) a space (46) there between, the space (46), the liquid dispersal chamber (33), a plurality of ridges (44) spaced about the sidewall (42) outer surface, the ridges (44) vertical or sloped extending out beyond the sidewall (42) outer surface, the ridges (44) providing a textured surface to at least partially prevent slippage when turned mechanically by tool or manually by hand, the inner casing (34) comprises a spacer (45), sloped flange (49), liquid collection chamber (35) and connecting aperture (36), the spacer (45) at the top centre of the inner casing (34) and under the closed top (40) cover (39) forming a space (46) between the two, the spacer (45) dimensionally smaller than the inner casing (34) forming a ledge (47), the ledge (47) sloped or planar, a plurality of openings (48) spaced about the ledge (47), the openings (48) through the ledge (47) to the liquid collection chamber (35) contained within the inner casing (34), the liquid collection chamber (35) any geometric shape or dimension, the liquid collection chamber (35) configured between the spacer (45) and the connecting aperture (36), the connecting aperture (36) configured to attach to a liquid dispersal portion (19), fitting, pipe or hose (53), the connecting aperture (36) threaded or not threaded, the sloped flange (49) encompasses the inner casing (34) lowermost perimeter edge (50), the sloped flange (49) any degree of angle sloped down and away from the inner casing (34) wall (51), the sloped flange (49) disposed to disperse liquid (37) at said angle, the liquid collection chamber (35) disposed to channel liquid (37) through the ledge (47) openings (48) into the liquid dispersal chamber (33), a space (46) between the outer casing (32) and the inner casing (34), the distance between the two disposed to govern the flow of a liquid (37), the flow of liquid (37) rises vertically within the liquid collection chamber (35) through the ledge (47) openings (48) into the liquid dispersal chamber (33), the vertical liquid (37) flow altered (38) horizontally after contact with the top interior of the outer casing (32), the horizontal liquid (37) flow further altered (38) downward after contact with the interior surface of the outer casing (32) sidewall, the downward flow of liquid (37) further altered by the sloped flange (49), the liquid (37) disposed to cascade at any angle of degree over the sloped flange (49) 360 degrees about the circumference of the sloped flange (49).

7. The irrigation device as claimed in claim 1, wherein a plurality of plants (54) are grown spaced a distance from one another on top of, inside or outside the circumference of at least one circle configured within the plant growth area (61), the plant growth area (61) further comprising a plurality of circles (59) to grow plants (54), one circle inside the other, each circle spaced a distance from another or a plurality of plants (54) grown spaced a distance from one another on top of, inside or outside the curve of a spiral shape configured within the plant growth area (61).

8. The irrigation device as claimed in claim 7, wherein the plants (54) are watered using any type of watering apparatus, the watering apparatus comprising a external water supply receptacle and nozzle, the watering apparatus placed at the approximate centre and/or anywhere within or outside the plant growth area (61), the watering apparatus further comprising a soaker or dripper hose (53), either hose (53) laid about the curve of the spiral or circumference of any circle, one end or both ends of either hose (53) connected to the watering apparatus.

9. The irrigation device as claimed in any one of claims 1 - 8, wherein the (61) is covered with a non-translucent cover (56), the non-translucent cover (56) disposed to suppress undesirable weed growth, the non-translucent cover (56) permeable or non-permeable, the non-translucent cover (56) fabricated from a variety of materials including plastics and cloth, the cover manufactured a dark colour to attract heat from the sun, the non-translucent cover (56) configured with openings (58) for growing desirable the plants (54), any opening(s) (58) further configured with one or more cut slits any dimension spaced about the perimeter edge of the opening (58), the non-translucent cover (56) manufactured a reflective colour to induce flowering and fruit set of plants.

10. The irrigation device as claimed in claims 7 - 9, wherein the plant growth area (61) and/or non-translucent cover (56) is covered with a cover material, said cover material disposed to protect said plants (54) from damage caused by insects, birds and small animals, the cover material non-perforated or perforated, the cover material translucent to allow the passage of sunlight and liquid (37), the cover material further disposed to collect heat from the sun, the cover material fabricated from a variety of materials including plastics and cloth.

11. A method that uses the irrigation device or any type of watering apparatus of any one of claims 1-10 to flood irrigate the plants (54); the method comprising the steps of creating a circular plant growth area (61) with a mechanical device or by hand comprising two circle shapes one larger than the other about the irrigation device or any watering apparatus by first using two stakes tied together with a string or cord at a desired length at the top of each stake, then creating the first circle shape by inserting the first stake into the soil at the centre of the plant growth area (61) and pulling the second stake away from the first stake until the string is taunt then pulling the second stake across the soil tracing the outline of a the first circle shape into the soil around the centre of the plant growth area (61), then attaching to the top of each stake a length of string greater in length than the first length of string to create the second circle shape larger than the first by inserting the first stake into the soil at the centre of the plant growth area (61) and pulling the second stake away from the first stake until the string is taunt then pulling the second stake across the soil tracing the outline of the second circle shape into the soil outside the first circle shape and around the centre of the plant growth area (61).

12. The method of claim 11, further including the step of creating a trench (60) between the two circles by using soil and/or earth moving tools such as a rake or shovel to pull the soil from outside and/or inside each circle covering each of the two circle shape outlines traced into the soil to create a raised earthen mound or earthen dam (57) on top of the circumference of each of the two circle shape outlines, then filling the interior of the first circle with soil to the height of the earthen mound or dam (57) and then leveling the soil to provide a level surface to rest the irrigation device upon.

13. The method of claim 12, further including the step of creating openings (58) spaced a distance from one another in any geometric pattern including, without limitation a spiral, circle or multi-circle pattern in a plastic or rubber non-translucent cover (56) to suppress weed growth and then covering the plant growth area (61) with non-translucent cover (56) so the openings (58) lay within the trench (60), then securing the non-translucent cover (56) in place with weighted objects and/or fasteners to prevent removal from wind blow.

14. The method of claim 13, further including the step of attaching the liquid dispersal portion (19) to the base portion (1) and inserting one end of the hose (53) through the base portion (1) channel (8) opening (13) and connecting one end of the hose (53) to the liquid dispersal portion (19) then connecting the other end of the hose (53) to an external water supply, then placing the irrigation device at the centre of the plant growth area (61) on top of the non-translucent cover (56) and then planting seeds or transplants in non-translucent cover (56) openings (58) within the trench (60) and filling the trench (60) periodically with liquid (37) dispersed by the liquid dispersal portion (19) to fill the trench (60) at least partially with liquid (37) between the earthen mounds or dams (57) to flood irrigate the plants (54).

15. A method that uses a template to create circle shapes of any one of claims 1-14, the method comprising the steps of creating a template configured the shape of any one or both circles then placing the template on top of the soil and then tracing an outline the circles in the soil around the edge(s) of template and/or covering the template with the soil to the height of the earthen mound or the earthen dam (57).
